# EUROPEAN PATENT APPLICATION

(11) **EP 2 234 195 A1**
(43) Date of publication of application: **29.09.2010**
(21) Application number: 08854095.0
(22) Date of filing: 19.11.2008
(51) Int. Cl.: H01M 10/36, H01M 4/62

(54) **LITHIUM ION RECHARGEABLE BATTERY AND PROCESS FOR RPODUCING THE RECHARGEABLE BATTERY**

(30) Priority: 26.11.2007 JP 2007305103
(71) Applicant: Namics Corporation, Niigata-shi, Niigata 950-3131 (JP)
(72) Inventor: SATO, Hiroshi, Shibata-shi Niigata 957-0231 (JP); SASAGAWA, Hiroshi, Shibata-shi Niigata 957-0231 (JP); SAKAI, Noriyuki, Niigata-shi Niigata 950-3131 (JP); FUJITA, Takayuki, Niigata-shi Niigata 950-3131 (JP)
(74) Representative: Dr. Weitzel & Partner
(86) International application number: PCT/JP2008/071032
(87) International publication number: WO 2009/069521

(57) **Abstract**

A multilayer whole solid-type lithium ion rechargeable battery has hitherto been produced by stacking green sheets of a positive electrode layer, a solid electrolyte layer, and a negative electrode layer, which are formed of respective materials different from each other in coefficient of thermal expansion, and firing the layers at a time. This technique poses problems of delamination and nonlamination attributable to a difference in shrinkage, The problems can be solved by forming green sheets with the addition of a sintering aid to each starting material powder for the positive electrode layer, the solid electrolyte layer, and the negative electrode layer and performing control, by setting the additive rate of the sintering aid and the firing temperature, so that the shrinkages of the respective green sheets are substantially equal to each other. Consequently, unfavorable phenomena such as delamination can be prevented.

## Description

### Technical Field

The invention relates to a multilayer all solid state secondary battery including a stacked body consisting of a positive electrode layer, solid-type electrolyte layer, and negative electrode layer, and producing process of the multilayer all solid state secondary battery.

### Background of the Invention

Patent Reference 1: Japanese Unexamined Patent Application Publication No. (Tokkai) 2006-261008
Patent Reference 2: Japanese Unexamined Patent Application Publication No. (Tokuhyo) 2003-505325
Patent Reference 3: Japanese Unexamined Patent Application Publication No. (Tokuhyo) 2003-505326
Patent Reference 4: Japanese Unexamined Patent Application Publication No. (Tokkai) 2001-48545

In recent years, advances in electronic technology have been remarkable, and thus it is possible to reduce the size, weight, and thickness and increase functions of mobile electronic devices. Following such a trend, reduction in size, weight, and thickness, and increase in reliability have been demanded to batteries, which are the power supply of electronic devices. To respond to such a demand, multilayer lithium ion rechargeable batteries in which several layers of positive electrode and negative electrode are stacked through a solid-type electrolyte layer are proposed. Since a multilayer lithium ion secondary battery is produced by stacking battery cells, whose each thickness is a few tens of micrometer, reduction of battery size and thickness can easily be made. Parallel and series stack cells especially are superior in realizing a large discharge capacity even in a small cell area. Moreover, a all solid state lithium ion secondary battery uses a solid-type electrolyte instead of electrolytic solution, which increases reliability because such problems as solution leakage and solution depletion do not occur. Furthermore, it is possible to obtain high voltage and energy intensity since a battery using lithium.

According to Patent Reference 1, a multilayer solid-type lithium ion secondary battery in which a positive electrode layer, electrolyte layer, negative layer, and collector layer are stacked is proposed. Patent Reference 1 introduces specific materials forming a battery: materials such as lithium manganese composite oxides and lithium nickel composite oxides as positive electrode materials, materials such as Li3PO4 and Li3PO4-xNx as electrolyte materials, substances such as metallic lithium and lithium amalgam as negative electrode materials. The constituents of these materials are mixed using a binder and solvent to form slurry, which is coated by screen printing and doctor blade method, processed into a sheet, stacked, and sintered to produce batteries.
The conventional multilayer lithium ion rechargeable batteries have posed a problem of delamination between the contact interfaces of each material after sintering. Moreover, if sintering is not made at a sufficiently high temperature, densification of each material is not advanced, which prohibits from forming high-performance batteries.

### Disclosure of Invention

### Problems to Be Solved by this Invention

This invention aims at prohibiting delamination (exfoliation between layers) and non-lamination (defect of non-adhesion) caused by shrinkage factor difference in each material and reducing production costs by lowering the temperature for sintering.

### Means of Solving the Problems

The present invention (1) relates to a multilayer all solid state lithium ion secondary battery, in which a stacked body is formed by alternately stacking positive electrode layers and negative electrode layers with a solid-type electrolyte layer sandwiched and undergoes a sintering process, wherein a boron compound is added to the positive electrode layer, negative electrode layer, and/or solid-type electrolyte layer.
The present invention (2) is the lithium ion secondary battery of the invention (1), wherein the boron compound is B₂O₃, or a compound that produces B₂O₃ through thermal decomposition or oxidization.
The present invention (3) is the lithium ion secondary battery of inventions (1) and (2), wherein the additive amount of the boron compound is 0.15 wt% or more in weight of boron oxide equivalent.
The present invention (4) is a sintering aid consisting of a boron compound that is doped into the positive electrode layers, negative electrode layers, and/or solid-type electrolyte layers to accelerate the sintering, the sintering aid that is used for a multilayer all solid state lithium ion secondary battery, in which a stacked body is formed by alternately stacking positive electrode layers and negative electrode layers with a solid-type electrolyte layer sandwiched and undergoes a sintering process.
The present invention (5) is a method of producing a lithium ion secondary battery that comprises at least the steps of forming the paste for positive electrode by dispersing positive electrode materials over vehicle, forming the paste for solid-type electrolyte by dispersing solid-type electrolyte materials over vehicle, forming the paste for negative electrode materials over vehicle, forming a positive electrode sheet by coating and drying the paste for positive electrode, forming a solid-type electrolyte sheet by coating and drying the paste for the solid-type electrolyte, forming a negative sheet by coating and drying the paste for the negative paste, forming a stacked body by stacking the positive electrode sheet, the solid-type electrolyte sheet, and the negative electrode sheet, and forming a sintered stacked body by stacking the stacked body, wherein boron compound is doped into the positive electrode material, the solid-type electrolyte material, and/or the negative electrode material, and then they are co-fired.
The present invention (6) is a method for producing lithium ion secondary battery of the present invention (5), wherein the boron compound is B₂O₃, or a compound that produces B₂O₃ through thermal decomposition or oxidation.
The present invention (7) is a method for producing a lithium ion secondary battery of the present invention (5) or (6), wherein the additive amount of the boron compound is 0.15 wt% or more in weight of boron oxide equivalent.
The present invention (8) is a method for producing a lithium ion secondary battery of the present inventions from (5) to (7), wherein the sintering temperature during the process of the sintering is no less than 600 degrees centigrade and no more than 1100 degrees centigrade.
The present invention (9) is a method for producing a lithium ion secondary battery of the present inventions from (5) to (7), wherein the sintering temperature during the process of the sintering is no less than 700 degrees centigrade and no more than 1100 degrees centigrade.

### Effects of Invention

According to the present inventions (1), (2), (4), (5), and (6),
1. It is possible to control so that shrinking behavior of each material is uniform by means of doping a sintering aid into the positive electrode material, solid-type electrolyte material, and negative material that form a battery, and adjusting the additive amount of the sintering aid and sintering temperature. This control can prevent delamination and non-lamination caused by internal deformation or internal stress of a battery.
2. Doping of the sintering aid can lower sintering temperature, which can result in an effect of reduction of the production costs including the electricity cost of baking furnace. Moreover, if power collection electrodes are used as battery material, it is possible to use silver, which features lower melting point and lower material cost than silver palladium, leading to an effect of cost reduction of material.
According to the present inventions (3) and (7), grain boundary dissolution is promoted in the battery material, and therefore, it is possible to produce batteries with low internal resistance and high performance.
According to the present invention (8), sintering is promoted even under low temperature, and therefore, it is possible to produce superior batteries with low ion diffusion resistance and low internal impedance.
According to the present invention (9), sintering can be promoted sufficiently, which has great effects of increase of battery performance and prevention of delamination by means of shrinkage behavior control of each material.

### Brief Explanation of the Drawings

[Figure 1] Graph showing the shrinkage factor of pellets made through doping of sintering aid
[Figure 2] Cross sectional views of lithium ion rechargeable batteries related to the embodiments of the present invention shown from (a) to (d)
[Figure 3] Steps for explaining the doping method of the sintering aid related to the embodiments of the present invention shown from (a) to (d)
[Figure 4] Cross sectional views of steps of the production method of lithium ion rechargeable batteries related to the embodiments of the present invention shown from (a) to (e)
[Figure 5] Graph showing sintering aid additive rate dependency of positive electrode material pellet shrinkage factor
[Figure 6] Graph showing sintering aid additive rate dependency of solid-type electrolyte material pellet shrinkage factor
[Figure 7] Graph showing sintering aid additive rate dependency of negative electrode material pellet shrinkage factor
[Figure 8] SEM picture of fracture cross section of positive electrode material pellets after sintering process
[Figure 9] SEM picture of fracture cross section of solid-type electrolyte material pellets after sintering process
[Figure 10] SEM picture of fracture cross section of negative electrode material pellets after sintering process
[Figure 11] Graph showing the shrinkage factor of the pellets formed without doping of sintering aid

### Explanation of Reference Numerals

1, 4, 7, and 10: Positive electrode layers
2, 5, 8, and 11: Solid-type electrolyte layers
3, 6, 9, and 12: Negative electrode layers
13, 14, 50, and 51: Protective layers
15 and 48: Positive electrode terminals
16 and 49: Negative electrode terminals
21: Sintering aid
22: lon-exchange water
23: Battery material
24: Sintering aid solution
25: Battery material into which sintering aid is doped
26: Battery material
27: Battery material sheet
28, 31, 33, and 36: PET substrates
32, 34, 37, 39, 42, and 45: Solid-type electrolyte sheets
35, 41, 44, and 47: Positive electrode sheets
38, 40, 43, and 46: Negative electrode sheets

### Description of the Preferred Embodiments

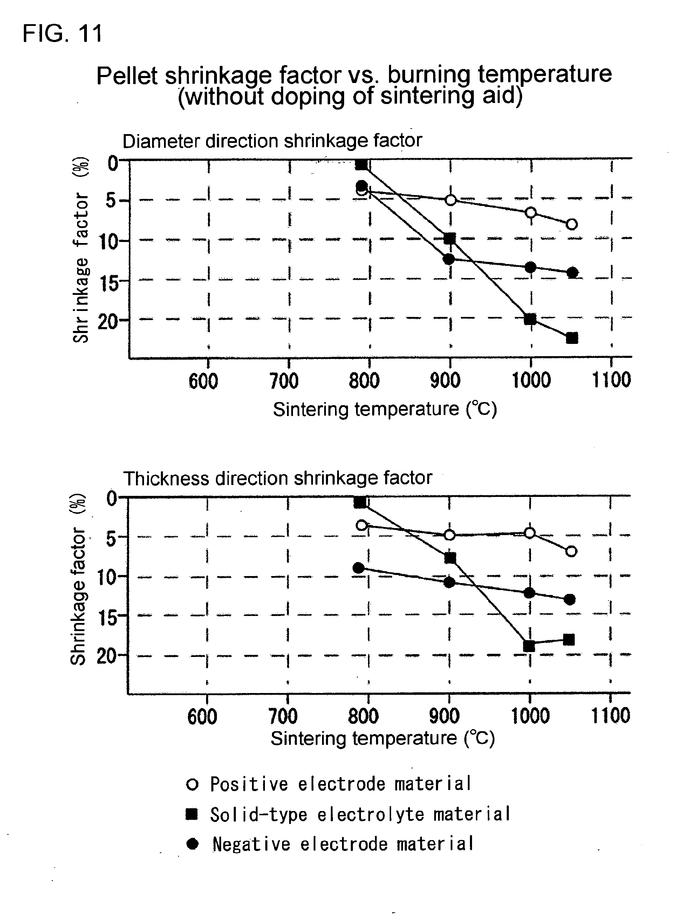

The preferred embodiments of the present invention are described as follows.
A solid-type lithium ion secondary battery is produced through the steps below. First, positive electrode material, solid-type electrolyte material, and negative electrode material, which are raw materials for each materials, are calcined, and then crushed into powder. Next, the powder of each material is dissolved in binder and solvent to form paste of each material. After that, the paste of these materials are processed and sheeted to form green sheets. These green sheets are stacked, and then co-fired. Finally, electrode terminals and protective layers are formed to complete a battery. In this process, sintering refers to thermal processing for sintering. Sintering is a phenomenon of which powder is hardened to form dense material called the sintered body when a lump of solid powder is heated under a temperature lower than the melting point. Sintering bonds powder grains together scattered over each sheet of positive electrode, solid-type electrolyte, and negative electrode to allow the powder grains to grow into large grains. Through process, the contact area between grains increases; distance between grains decreases. This condition where sintering sufficiently proceeds, and thus grain size increases and distance between grains decreases is a favorable condition for battery materials because the diffusion resistance of the lithium battery is low.
As sintering sufficiently proceeds, distance between grains decreases. And this shrinks the whole sizes of a green sheet. Due to such characteristics, the status of how sintering proceeds can be understood not only through the micro-level observation of cross sectional sizes of grains of each material but also the macro-level observation of the shrinkage factor of each material. Figure 11 shows graphs of shrinkage factors of positive electrode material, solid-type electrolyte material, and negative electrode material. The materials used for the positive electrode material, solid-type electrolyte material, and negative electrode material are LiMnO₂, Li₇PSiO₈, and Li₄Ti₅O₁₂, respectively. Each material was ground with a ball mill, and then ground with Pico Mill™. The materials are dissolved with binder and solvent, and the mixture was processed into pellets with 16.5 mm in diameter and 1 mm in thickness. After that, the pellets were sintered under four temperature conditions: 800, 900, 1000, and 1050 degrees centigrade, and dimension changes in diameter direction and thickness direction were measured to calculate the shrinkage factor of each material. As shown in Figure 11, when pellets were formed based on a conventional technique in which the positive electrode material and other raw materials were dissolved with binder and solvent, the shrinkage factors had not saturated even though sintering is made under relatively high temperatures from 800 to 1000 degrees centigrade, and shrinkage had advanced as temperature increased. These results indicate that sintering had not sufficiently advanced. In addition, a notable fact in Figure 11 is a large variation in shrinkage factors among the positive electrode material, solid-type electrolyte material, and negative electrode material. It is revealed, in the materials used for the evaluation test, that the positive electrode material has relatively small shrinkage factor, and the solid-type electrolyte material has relatively large shrinkage factor. This evaluation test clarified that the causes of the exfoliation in bonded interface are estimated to be different in shrinkage factors of the positive electrode layer, solid-type electrolyte layer, and negative electrode layer upon sintering, and deformation and stress within the battery after sintering.
The inventors of the present invention studied how to control the shrinkage factor of each material that is subject to sintering. As a result, they revealed that the shrinkage factors of positive electrode material, solid-type electrolyte material, and negative electrode material became almost uniform by means of adjusting sintering aid additive amount for each material and controlling sintering temperature. Moreover, it was found that sintering of each material proceeded at a relatively low temperature of about 700 degrees centigrade, and production of excellent batteries with lower ion diffusion resistance and internal impedance is possible. In addition, it was revealed that sintering proceeded at lower temperatures from 600 degrees centigrade to 700 degrees centigrade compared with the case without sintering aid.

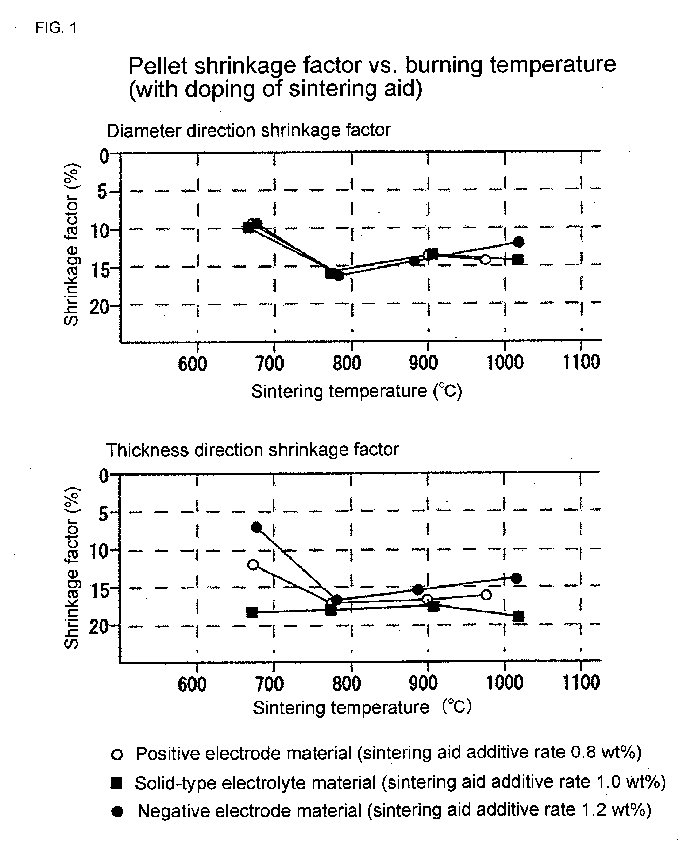

Figure 1 shows graphs of measurement results of the shrinkage factors of pellets used in this evaluation test that uses the pellets produced based on the production method related to the present invention. The evaluation test related to the present invention uses the same raw materials of positive electrode, solid-type electrolyte, and negative electrode as those of the evaluation test of Figure 11. Each material was ground with Pico Mill™, and the processed powder was dipped into the sintered aid dissolved with ion exchange water, and was dried thereafter, and after drying, the powder was dissolved with binder and solvent. After these processes, these materials were processed into pellets with 16.5 mm in diameter and 1.0 mm in thickness. They are sintered under four temperature conditions: 700, 800, 900, and 1000 degrees centigrade, and then changes in diameter direction and thickness direction were measured to calculate shrinkage factor of each material. Boron oxide (B₂O₃) was used for sintering aid. The additive rates for the positive electrode material, solid-type electrolyte material, and negative electrode material were 0.8, 1.0, and 1.2 wt%, respectively.
As shown in Figure 1, it is found that, when sintering is performed at temperatures of 780 or 790 degrees centigrade or higher, doping of a sintered aid consisting of a boron compound resulted in uniform shrinkage factors for all materials. That is to say that shrinkage factors of positive electrode material, solid-type electrolyte material, and negative electrode material are within 15±5% in diameter direction and thickness direction. Moreover, it is clarified that, even the temperature is increased, the shrinkage factor is saturated; in other words, sintering has already proceeded. On the other hand, the shrinkage factors have not saturated under the condition of a temperature of 1050 degrees centigrade when the sintered aid of Figure 11 is not doped. Unlike this fact, doping of the sintered aid greatly lowers the sintering temperature at which the sintering sufficiently proceeds.

### Structure of Battery

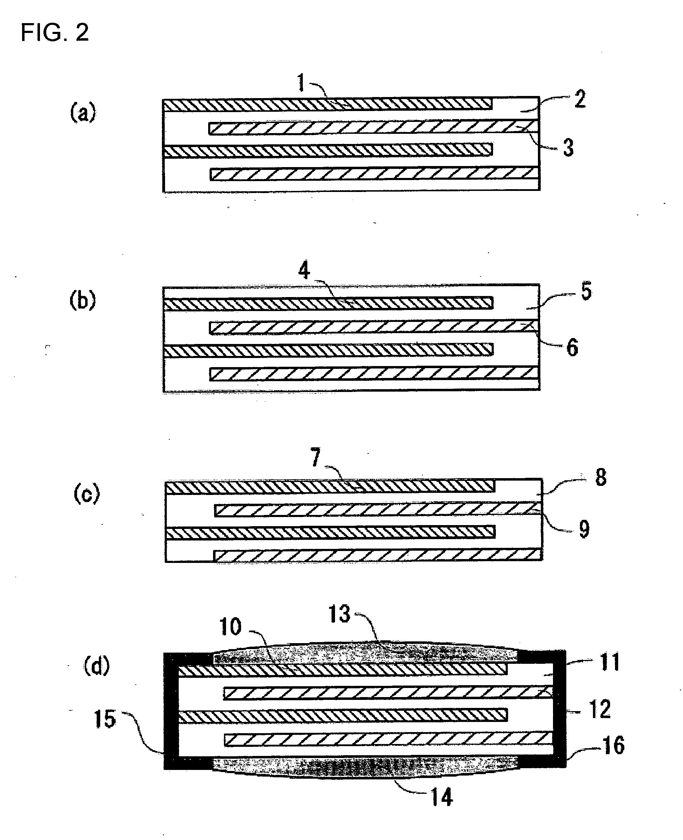

The structure of the multilayer all solid state lithium ion secondary battery related to the present invention employs a structure in which a stacked body is formed by alternately stacking positive electrode layers and negative electrode layers with a solid-type electrolyte layer sandwiched, and the positive electrode terminal, negative electrode terminal, and protective layer are attached to the stacked body. Even in a battery whose structure is featured by parallel alignment of the collector layer along the positive electrode layer and/or the negative electrode layer, application of the technology related to the present invention leads to the effects of the prevention of delamination, and reduction in production cost and material cost. Example of parallel alignment of the collector layer includes a structure in which the positive electrode layer, collector layer, and positive electrode layer are used for the positive electrode film, and the negative electrode layer, collector layer, and negative electrode layer are used for the negative electrode film, with the solid-type electrolyte layer sandwiched between the positive electrode film and negative electrode film, and the positive electrode terminal, negative electrode terminal, and protective layer are attached to the stacked body to which the positive electrode film and negative electrode film are stacked. In the specification of the present invention, the positive electrode film or negative electrode film with the collector are also called simply the positive electrode layer or negative electrode layer.
From (a) to (d) of Figure 2 shows cross sectional views of stacked layer bodies forming the all solid state lithium ion secondary battery and structures of battery related to the present invention and their variants.
Figure 2 (a) is a cross sectional view of the most basic structure of stacked layer body. Positive layer 1 and negative layer 3 are alternately stacked with the solid-type electrolyte layer 2 between. As described in the production method of a battery hereinafter described, in a case where layer stacking is performed after a positive electrode sheet or negative electrode sheet are formed above a solid-type electrolyte sheet, the structure with the solid-type electrolyte layer at the lower surface and the electrode layer at the upper surface is the stacked layer body structure with the least number of work process as shown in Figure 2 (a). A stacked layer body in which the positive electrode layer and negative electrode layer are stacked with the solid-type electrolyte sandwiched between forms one single cell, which translates three battery cells stacked in Figure 2(a). The technology introduced in the present invention of lithium ion rechargeable batteries is applied to the battery in which three layers cells are stacked as shown in the figure and a battery in which more than one and an arbitrary number of layers are stacked. Also, this technology can be flexibly applied to the required capacity or current specification of a lithium ion battery. To fully exploit the advantages of the present invention, the cell count is preferably 2 to 500 pieces, more preferably 5 to 250 pieces. In Figure 2 (a), the positive electrode layer extends to the left-edge face of the stacked body and the negative electrode layer extends to the right-edge face of the stacked body. This arrangement is a suitable structure in a parallel-type or serial-type battery in which electrode terminals are provided at edge faces. The technology of the present invention of the lithium ion secondary battery is applied not only to parallel-type batteries as shown in the figure, but also to serial-type batteries and serial-parallel-type batteries.
Figure 2 (b) illustrates a structure of which solid-type electrolyte layer 5 is placed above and below the stacked layer.
Figure 2 (c) shows a structure of which a positive electrode layer is placed above the stacked layer and a negative electrode layer is placed below the stacked layer.
Figure 2 (d) is a cross sectional view of a lithium ion secondary battery to which electrode terminals and protective layers are provided at the edges of the stacked body. The positive electrode terminal 15 is electrically connected to the positive electrode layer 10 on the left of the battery; the negative electrode terminal 16, to the negative electrode layer 12 on the right of the battery. Protective layers 13 and 14 are formed as the outermost layers of the battery, which protect the battery electrically, physically, and chemically. Environmentally safe material with isolation, durability, and water resistance, for example ceramics or resin should be preferably used for the material of the protective layer.

### Material of Battery

### (Material of Active Substance)

Material that effectively releases and absorbs lithium ions should be preferably used for the active substance forming electrode layers of the lithium ion secondary battery of the present invention. For example, transmission metal oxide or transmission metal complex oxide should be preferably used. It is preferable to use specifically lithium-manganese complex oxide, lithium-nickel complex oxide, lithium-cobalt complex oxide, lithium-vanadium complex oxide, lithium-titan complex oxide, manganese dioxide, titanium oxide, niobium oxide, vanadium oxide, and tungsten oxide. Moreover, lithium-manganese complex oxide and lithium-titan complex oxide feature that their volume changes are specifically small when lithium ions are absorbed or released, and their electrodes does not easily fracture or exfoliate, which is suitable characteristics to active substance material.
In this stage, there is no clear distinction between positive electrode active substance and negative electrode active substance. Then, after the comparison of potential of two compounds, the chemical compound that exhibits higher potential can be used as the positive electrode active substance; the chemical compound that exhibits lower potential, as the negative electrode active substance.

### (Material of Solid-type Electrolyte)

It is preferable to use material with low electron conductivity and high lithium ion conductivity as solid-type electrolyte that forms the solid-type electrolyte layer of the lithium ion secondary battery of the present invention. Moreover, the material should preferably be inorganic material that can be sintered at high temperature in the atmosphere. It is preferable that the material should be at least one material among lithium silicophosphate (Li_{3.5}Si_{0.5}O₄), lithium-titan phosphate (LiTi₂(PO₄)₂), lithium-germanium phosphate (LiGe₂(PO₄)₃), Li₂O-SiO₂, Li₂O-V₂O₅-SiO₂, Li₂O-P₂O₅-B₂O₃, Li₂O-GeO₂. Also, it is preferable to use material to which dissimilar element, Li₃PO₄, LiPO₃, Li₄SiO₄, Li₂SIO₃, or LiBO₂ is doped. The material for the solid-type electrolyte material can take any form among crystalline, noncrystalline, and glassy conditions.

### (Material of Sintered Aid)

It is preferable that the sintered aid that is added to each material of the lithium ion secondary battery of the present invention and accelerates sintering is a chemical compound containing boron. The chemical compound may be one or mixture of two substances among B₂O₃, H₃BO₃, lithium borate, sodium borate, organoboron compound, or a decomposition product of these substances. The most preferable substance is B₂O₃. Boric acid or boric acid compound changes to B₂O₃ when they are heated to 300 degrees centigrade in the atmosphere. Moreover, when organoboron compound is heated, organic functional groups are sintered, and B₂O₃ is left in the material. When these substances, which change to B₂O₃ by thermal decomposition or oxidation during the sintering process, are used for the sintered aid, higher effect of acceleration of sintering is observed as well as in the case where B₂O₃ is used as the sintered aid.

### How to Produce Battery

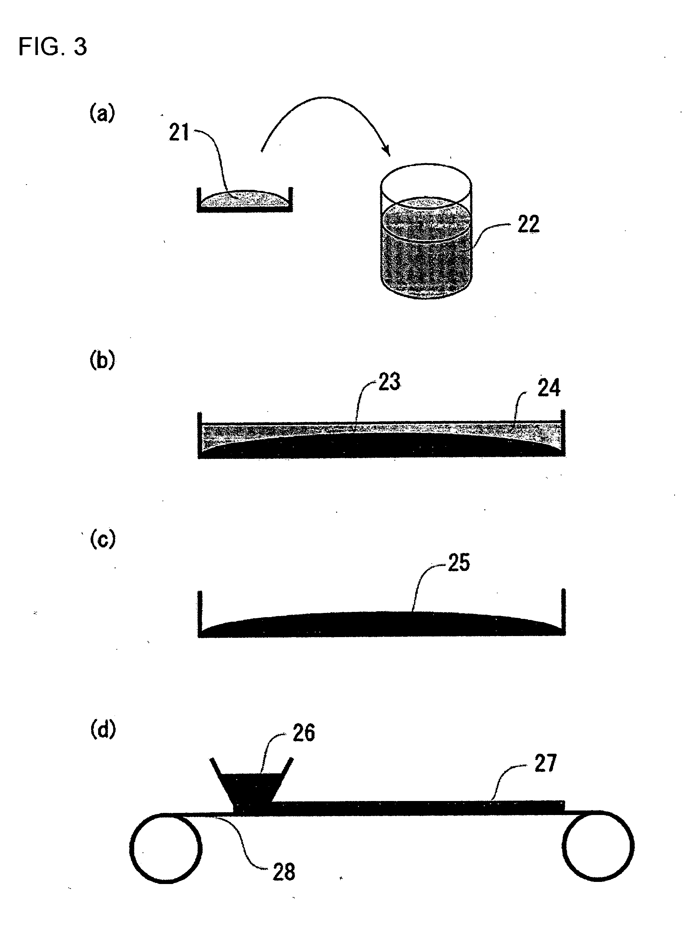

A stacked body of the multilayer all solid state lithium ion secondary battery of the present invention is produced through the steps of forming paste of materials of positive electrode, solid-type electrolyte, and negative electrode that form the stacked layer, and a given protective layer, forming green sheets of these materials, stacking these green sheets, and co-firing the stacked body produced.
In this case, each material of positive electrode active substance, negative electrode active substance, and solid-type electrolyte can be calcined inorganic salt of each substance. The purpose of tentative sintering is promoting chemical reaction. To sufficiently fulfill the functions of the substances after the collective sintering, the tentative sintering temperature of the positive electrode active substance, negative active substance, solid-type electrolyte substance are 700 degrees centigrade or higher.
From (a) to (d) of Figure 3 are cross sectional view of steps explaining how to dope the sintered aid related to the embodiment of the present invention. First, the sintered aid 21 such as powdered boron oxide is dissolved with ion exchange water 22 (Figure 3 (a)). Next, the positive electrode material, solid-type electrolyte material, and negative electrode material, which are powdered after tentative sintering, are dipped into the solution 24 into which the sintered aid previously made is dissolved (Figure 3 (b)). The immersion time is preferably at least one minute and no longer than five hours. Materials are dipped, and after they are left as this condition for a certain period of time, the materials are dried naturally or dried by evaporating the solution using a drying furnace (Figure 3 (c)). Each material, to which the sintered aid is added, is processed into paste.
The method of processing materials into paste is not limited. Paste can be formed, for example, by mixing the powder of each material into vehicle. In this case, the vehicle refers to generic term of medium in liquid. The vehicle includes medium and binder. Pastes for positive electrode layer, solid-type electrolyte layer, and negative electrode layer are made through the steps above.
The pastes produced are coated on a substrate such as PET in desired order, and they are dried as necessary. After that, the substrate is peeled off to form green sheets (Figure 3 (d)). The method of paste coating is not limited, and any known method including screen printing, coating, decal transferring, and doctor blade method can be employed.
The produced green sheets for the positive electrode layer, solid-type electrolyte layer, and negative electrode layer are stacked in a desired order and into desired number of stack layers. After the green sheets are stacked, alignment and cutting are made as needed in order to form the stacked body. To form parallel-type or serial-parallel-type battery, alignment and stacking is made so that the edge face of the positive electrode layer and the edge face of the negative electrode layer do not match.
The produced stacked bodies are collectively pressed and bonded. The pressing and bonding are done under heated condition, and in this case, the temperature is from 40 to 80 degrees centigrade, for example. The pressed and bonded stack bodies are sintered in the atmosphere. The sintering temperature is preferably to be from 600 to 1100 degrees centigrade in the production process of the lithium secondary battery of the present invention. If the temperature is lower than 600 degrees centigrade, the sintering is not sufficient enough, and if the temperature is higher than 1100 degrees centigrade, problems such as meltdown of the sold-type electrolyte and structural changes in the positive electrode active substance and negative electrode active substance occur. More preferably, the temperature should be from 700 to 1100 degrees centigrade. This is because, more advantages are expected in terms of progress of sintering and production cost reduction. The sintering time should be from one hour to three hours, for example.

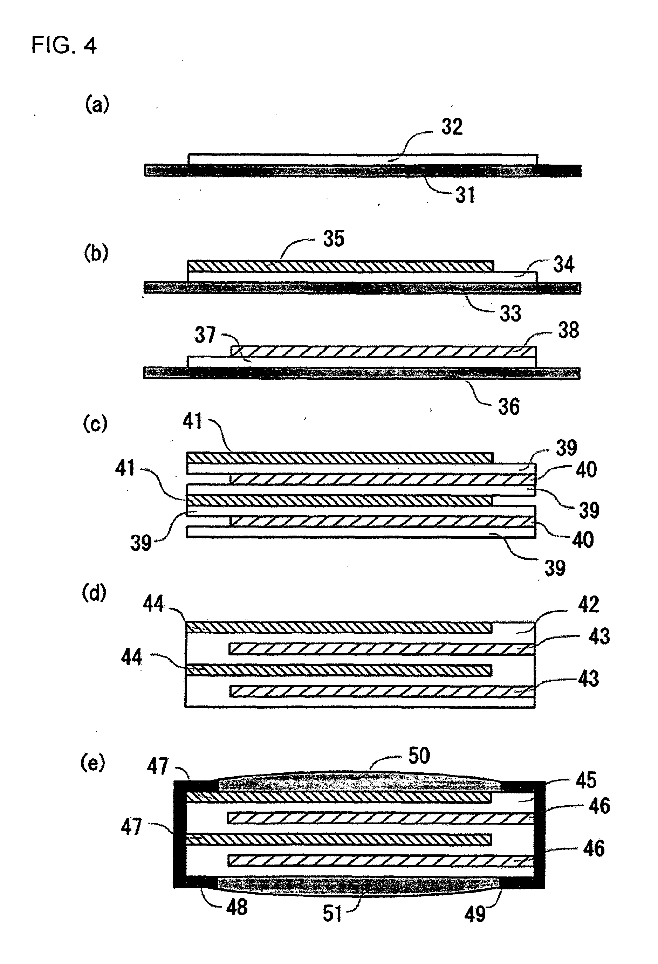

This paragraph explains the production method from green sheet production to completion of a battery. The first specific example of production method is a production method of the multilayer all solid state lithium ion secondary battery including steps from (1) to (4) below. From (a) to (e) of Figure 4 are cross sectional views of steps of a specific example of the production of the lithium ion battery related to the embodiment of the present invention.

### Step (1)

The solid-type electrolyte paste is coated on the PET substrate 31 and is dried to form the solid-type electrolyte sheet 32 (Figure 4 (a)). Hereinafter, the "green sheet" is called simply the "sheet." After that, the positive electrode paste is coated on the solid-type electrolyte sheet 31 and is dried to form the positive electrode sheet 35 (Figure 4 (b)). Next, the negative electrode paste is coated on the solid-type electrolyte sheet 36 and is dried to form the negative electrode sheet 38 (Figure 4 (b)).

### Step (2)

A positive electrode unit to which the solid-type electrode sheet and positive electrode sheet are stacked is peeled off from the PET substrate. Also, a negative electrode unit to which the solid-type electrode sheet and negative electrode sheet are stacked is peeled off from the PET substrate. Next, the positive electrode units and negative electrode units are alternately stacked to form a stacked body in which the positive electrode layer sheet 43 and negative electrode sheet 44 are alternately stacked with the solid-type electrolyte sheet 42 sandwiched between. In this case, alignment of the positive electrode unit and negative electrode unit is made when stacking is made as necessary so that the negative sheet is not exposed at one edge of the stacked body and the positive electrode sheet is not exposed at the other edge of the stacked body (Figure 4 (c)).

### Step (3)

Sintered stacked body is created after sintering of the stacked body (Figure 4 (d)).

### Step (4)

Provide the positive electrode terminal 48 so that it contacts to the positive electrode layer 47 and the negative electrode terminal 49 so that it contact to the negative electrode layer 46, at the sides of the stacked body. Electrode terminals (extraction electrodes) are formed, for example, by sintering at temperatures from 500 to 900 degrees centigrade after the extraction electrode paste is coated at each side of the battery. Protective layers 50 and 51 are provided at outermost areas of the stacked body as necessary to complete the battery (Figure 4 (e)).

The second specific example of production method is a production method of the multilayer all solid state lithium ion secondary battery including steps from (i) to (iii) below.

### Step (i)

A stacked body consisting of green sheets, which are produced by coating and drying the positive electrode paste, solid-type electrolyte paste, negative electrode paste, and solid-type electroly paste, in this order. In this case, alignment of the positive electrode unit and negative electrode unit is made when stacking is made as necessary so that the negative sheet is not exposed at one edge of the stacked body and the positive electrode sheet is not exposed at the other edge of the stacked body.

### Step (ii)

After the substrate used for green sheet production is peeled off as necessary, a sintered stacked body is created following stacked body sintering.

### Step (iii)

Provide the positive electrode terminal so that it contacts to the positive electrode layer and the negative electrode terminal so that it contacts to the negative electrode layer, at the sides of the stacked body. Protective layers 50 and 51 are provided at outermost areas of the stacked body as necessary to complete the battery.

### Differences from Similar Prior Art

This paragraph describes differences of the present invention from the prior arts in terms of the secondary battery that undergoes thermal processing using boron compound as a sintered aid or melting agent.
Patent Reference 2 describes a technology about "lithium ion secondary battery including lithium-manganese oxide containing compound between lithium layers as positive electrode active substance," and Patent Reference 3 explains a technology about "lithium ion secondary battery including lithium oxide containing compound between lithium layers as positive electrode active substance." Patent Reference 2 indicates that "It is preferable to add a sintered aid to facilitate sintering, and the sintered aid to be used is preferably boron oxide, more preferably H₃BO₃" (Paragraph 28). Moreover, Patent Reference 3 states "It is preferable to add a sintered aid to simplify sintering, and the sintered aid to be used is preferably boron oxide, more preferably H₃BO₃" (Paragraph 41).
The differences from the present invention are as follows.
Patent References 2 and 3 state that it is preferable to add a sintered aid to the positive electrode active substance, and the effect of this is that sintering is facilitated or simplified. These statement does not clarify what specific effect can be made. No description on the control of shrinkage factor of material, which is an effect of the present invention, is provided. Moreover, no detailed description on solid-type electrolyte material and negative electrode material, which are other constituents of a battery, is provided. Also, any description on addition of a sintered aid to these material is not found. Therefore, even though a description of addition of boron oxide as a preferable sintered aid is provided, it is impossible to conceive, from technologies in Patent Reference 2 and 3 only, of the technology of the present invention, in which problems including delamination is avoided by means of making shrinkage factor of each material uniform after a sintered aid is added to the positive electrode material, solid-type electrolyte material, and negative electrode material, and additive amount and sintering temperature are controlled.
Moreover, the sintering processes stated in Patent References 2 and 3 differ from those of the present invention. Patent Reference 2, for example, introduces use of Li₂CO₃ and Mn₃O₄ as a starting material for synthesis of lithium-manganese complex compound when it is used as the positive electrode active substance. The sintering process, of which a sintered aid is added, in Patent References 2 and 3 is a heating process when the starting material is mixed and heated to synthesize the positive electrode active substance, which differs from the heating process of the present invention, in which green sheets of the positive electrode material, solid-type electrolyte material, and negative electrode material are stacked, and grains of each material are grown to make the stacked body dense. The following flow clearly explains this process.
Starting constituents of material → (A) → (B) Heating (Synthesis of material) → Drying and grinding → (C) → Binder, dissolving into solvent, and paste creation → Green sheet production → Stacking → (D) → Collective heating
In the flow above, a term "sintering" used in Patent References 2 and 3 refers to process (B), and addition of a sintered aid added in process (A). However, in the present invention, process (B) is called tentative sintering, and process (D) is referred to as sintering. The sintered aid is doped in process (C).
If the sintered aid is added in process (A) according to the technology disclosed by Patent References 2 and 3, significant effects cannot be made on control of shrinkage factors through heating in process (D) and facilitation of sintering. If the sintered aid added in process (A), sintering and crystal growth advances too much, thus posing a problem of troublesome in slightly powdering in the process of drying and powdering soon after process (B).
Therefore, the effects of the present invention's technology, in which sintering is facilitated and performed in lower temperature cannot be realized based on the technologies in Patent References 2 and 3, and thus it is impossible to conceive the technology of the present invention from Patent References 2 and 3.

Patent Reference 4 describes a technology about "lithium ion secondary battery including lithium-manganese complex oxide as positive electrode active substance." Also, it states "Lithium manganese complex oxide is synthesized by allowing lithium compound and manganese compound to react under a condition where liquid boron compound is present. (Claim 1) Through process, long-time high-temperature reaction is unnecessary. (Paragraph 0024)" and "Preferable boron compound is B₂O₃, H₃BO₃, or lithium borate (Paragraph 0008)."
The differences from the present invention are as follows.
First, the battery introduced in Patent Reference 4 is not a all solid state battery; it uses liquid for electrolyte. For this reason, Patent Reference 4 does not consider the problem of bonding exfoliation due to shrinkage factor difference of material used in a all solid state battery. Boron compound is added to only the positive electrode material, which differs from the technology of the present invention, in which additive amount of sintered aid doped into the positive electrode material, solid-type electrolyte material, and negative electrode material during the sintering process is adjusted and shrinkage factor is controlled.
In Patent Reference 4, as well as in Patent References 2 and 3, boron compound is added in the process before tentative sintering of the present invention (process (A) in the flow above). As described previously, this has different objective and effect from the present invention, in which the sintered aid is added in process (C) in the flow above.

### Embodiment

### Adjusting Shrinkage Factor by Adding Sintered Aid

Pellet samples of the lithium ion secondary battery are produced. On this occasion, a sintered aid is doped into the positive electrode material, solid-type electrolyte material, and negative electrode material. Measurement of shrinkage factors of the pellet samples that are sintered is made, and the SEM observation of fracture face is made.

### (Production of Sample)

The samples used this time are the same samples as those used in the shrinkage factor evaluation test shown in Figure 1. For how to make samples, detailed description is provided as follows.
The positive electrode material is a substance expressed as LiMnO₂, which is synthesized from MnCO₃ (C2-SP) made by CHUO DENKI KOGYO CO., LTD. and Li₂CO₃ made by NIPPON CHEMICAL INDUSTRIAL CO., LTD. through the process of two-hour tentative sintering at a temperature of 800 degrees centigrade. The solid-type electrolyte material is a substance expressed as Li7PSiO8, which is synthesized from Li₃PO₄ made by Wako Pure Chemicals Industries, Ltd., SiO₂ made by KCM Corporation, and Li₂CO₃ made by NIPPON CHEMICAL INDUSTRIAL CO., LTD. through the process of two-hour tentative sintering at a temperature of 950 degrees centigrade. The negative electrode material is a substance expressed as Li₄Ti₅O₁₂, which is synthesized from TiO₂ (KA-10C) made by Titan Kogyo, Ltd. and Li₂CO₃ made by NIPPON CHEMICAL INDUSTRIAL CO., LTD. through the process of two-hour tentative sintering at a temperature of 800 degrees centigrade. Materials after tentative sintering are ground with ball mill, and after that the positive electrode material is ground with Pico Mill™ at 60 Pass grinding level; solid-type electrolyte material and negative electrode material, 20 Pass grinding level. Next, a certain amount of sintered aid made of B₂O₃ is dissolved into ion exchange water, and powdered material of each material is dipped into the water, and then dried. The materials were dissolved into solvent with binder, and then processed into pellet shape, and finally subject to sintering. The additive amount of boric oxide is set to four levels: 0.2, 0.4, 0.8, and 1.6 wt% for positive electrode material, 0.25, 0.5, 1.0, and 2.0 wt% for solid-type electrolyte material, and 0.15, 0.3, 0.6, and 1.2 wt% for negative electrode material. Sintering temperatures are set to four levels for each material: 700, 800, 900, and 1000 degrees centigrade. The binder additive amount is 4 wt% for each material.
(Sintered Aid Additive Amount Dependency of Shrinkage Factor)

Sizes of diameter direction and thickness direction of pellets are measured before and after sintering, and then the shrinkage factor is calculated through the equation: Shrinkage factor = (Size before sintering - Size after sintering) / Size before sintering x 100%.

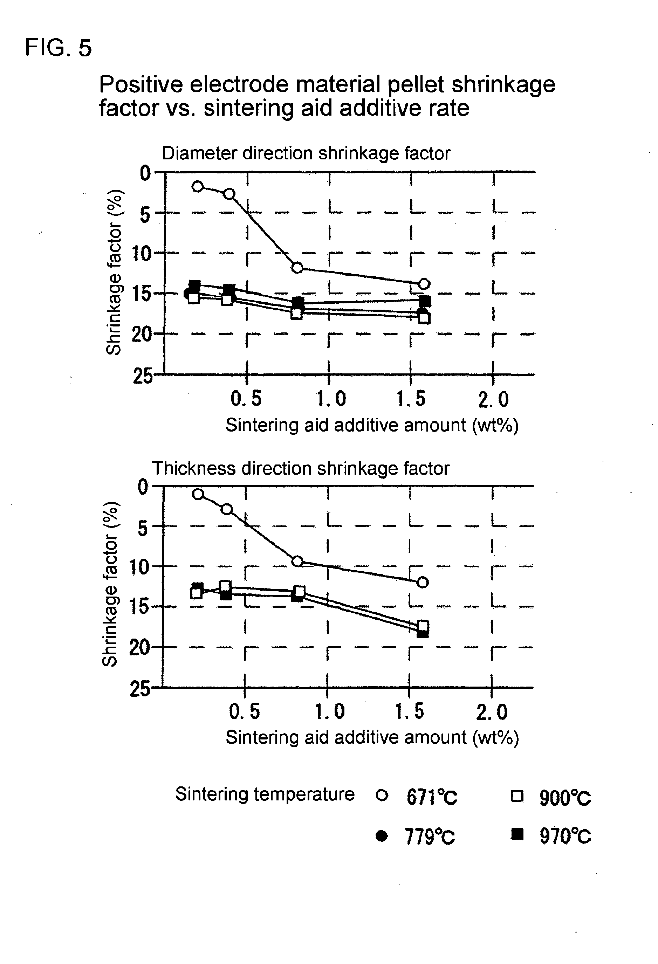

Figure 5 shows a graph of sintered aid additive amount dependency of shrinkage factor for positive electrode material pellets. Sintering was made in four levels of sintering temperature. The actually measured temperatures were 671, 779, 900, and 970 degrees centigrade. Figure 5 reveals that the more additive amount of sintering aid, the larger the shrinkage factor, which denotes that sintering progresses. Moreover, it is found that shrinkage factor is saturated when additive amount of the sintered aid is 1% or more, and even the additive amount is increased, further increase in shrinkage factor cannot be observed. Based on these facts, sufficiently effective sintering can be made by adding the sintered aid at 0.8 wt%, and sintering is made at a temperature of 780 degrees centigrade or higher.

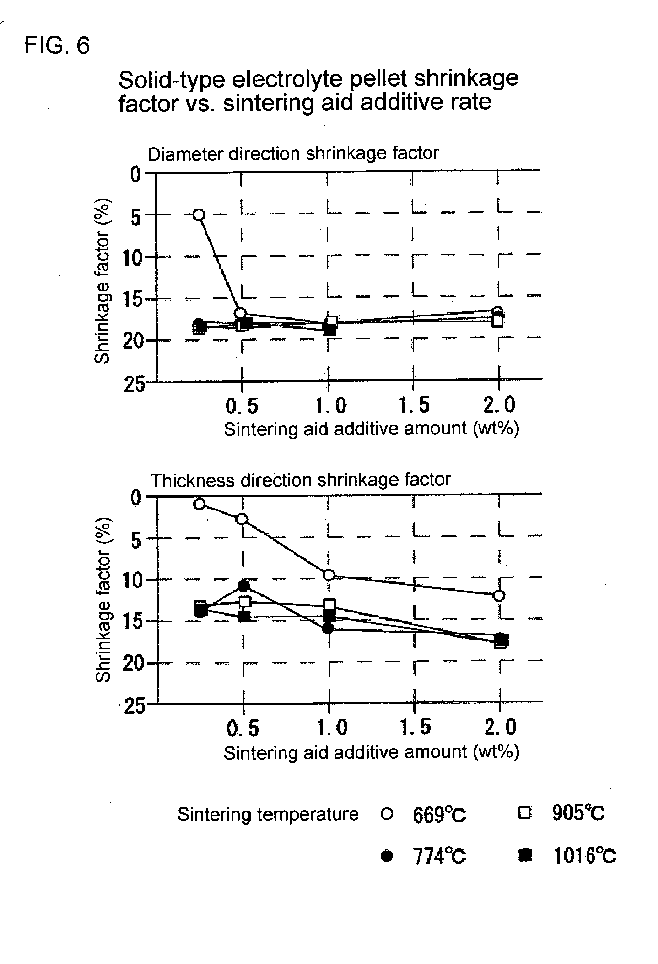

Figure 6 shows a graph of sintered aid additive amount dependency of shrinkage factor for the sold-type electrolyte pellets. Sintering was made in four levels of sintering temperature. The actually measured temperatures were 669, 774, 905, and 1016 degrees centigrade. Figure 6 reveals that the more additive amount of sintering aid, the larger the shrinkage factor, which denotes that sintering progresses in solid-type electrolyte material, too. Moreover, it is found that shrinkage factor is saturated when additive amount of the sintered aid is 1% or more, and even the additive amount is increased, further increase in shrinkage factor cannot be observed. Based on these facts, sufficiently effective sintering can be made by adding the sintered aid at 0.8 wt%, and sintering is made at a temperature of 770 degrees centigrade or higher.

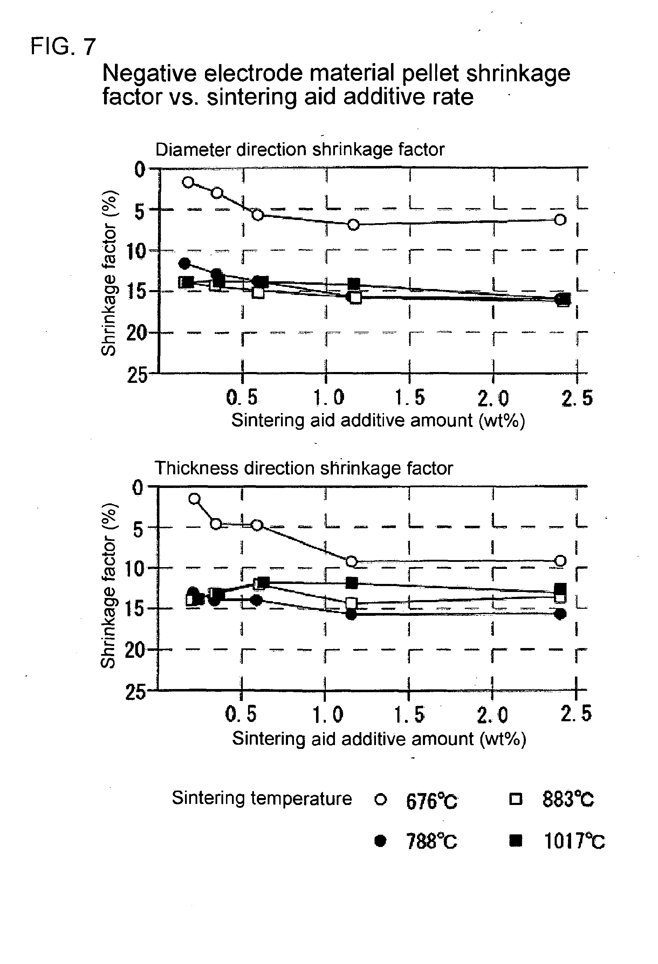

Figure 7 shows a graph of sintered aid additive amount dependency of shrinkage factor for negative electrode material pellets. Sintering was made in four levels of sintering temperature. The actually measured temperatures were 676, 788, 883, and 1017 degrees centigrade. Figure 7 reveals that the more additive amount of sintering aid, the larger the shrinkage factor, which denotes that sintering progresses. Moreover, it is found that shrinkage factor is saturated when additive amount of the sintered aid is 1% or more, and even the additive amount is increased, further increase in shrinkage factor cannot be observed. Based on these facts, sufficiently effective sintering can be made by adding the sintered aid at 0.8 wt%, and sintering is made at a temperature of 790 degrees centigrade or higher.
As shown above, it is revealed that, when the sintered aid consisting of boric oxide is doped, shrinkage factor is saturated when additive amount of the sintered aid is 1% or more, which denotes the sintering fully progresses, and shrinkage behavior can be effectively adjusted for any material of positive electrode, solid-type electrolyte, and negative electrode. For this reason, the additive amount is preferably 1 wt% in terms of shrinkage behavior control.
The preferable additive range of sintered aid here were derived from evaluation of the case where boric oxide is used as a sintered aid. When boron compound other than boric oxide is used, higher effects in shrinkage adjustment and internal resistance reduction can be expected through the production of battery by adjusting additive amount of boron compound so that the additive amount of boron agrees that in a case of boric oxide doping.
Moreover, since sintering proceeds sufficiently at lower temperatures from 780 to 790 degrees centigrade, electricity cost of sintering furnace can be reduced. Also, if a collector layer is allocated to the positive electrode layer and/or negative electrode layer in parallel, low-cost material such as silver with melting point of 962 degrees centigrade can be used without using high-cost material of silver-palladium alloy, which has an effect of reduction of material costs.

### (SEM Pictures of Fracture Face)

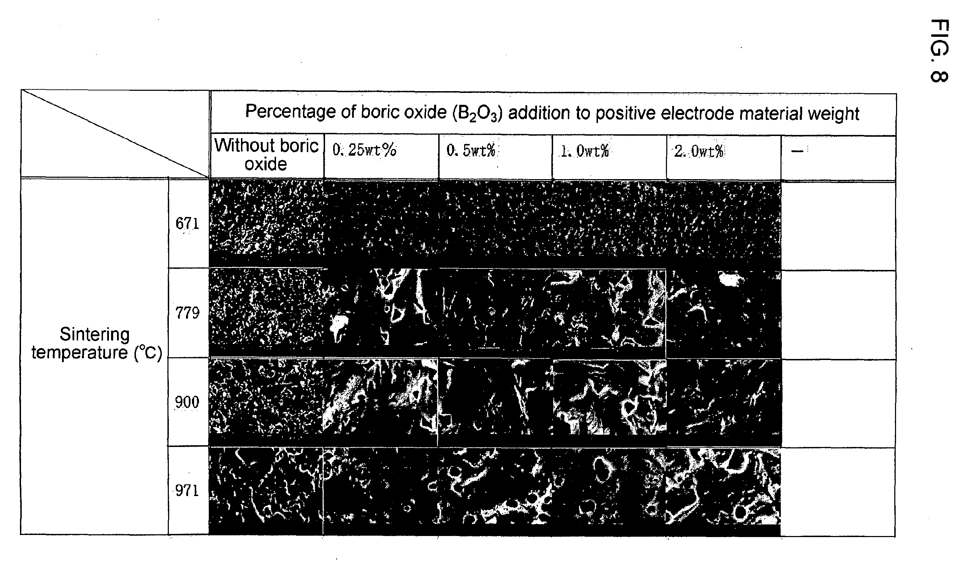

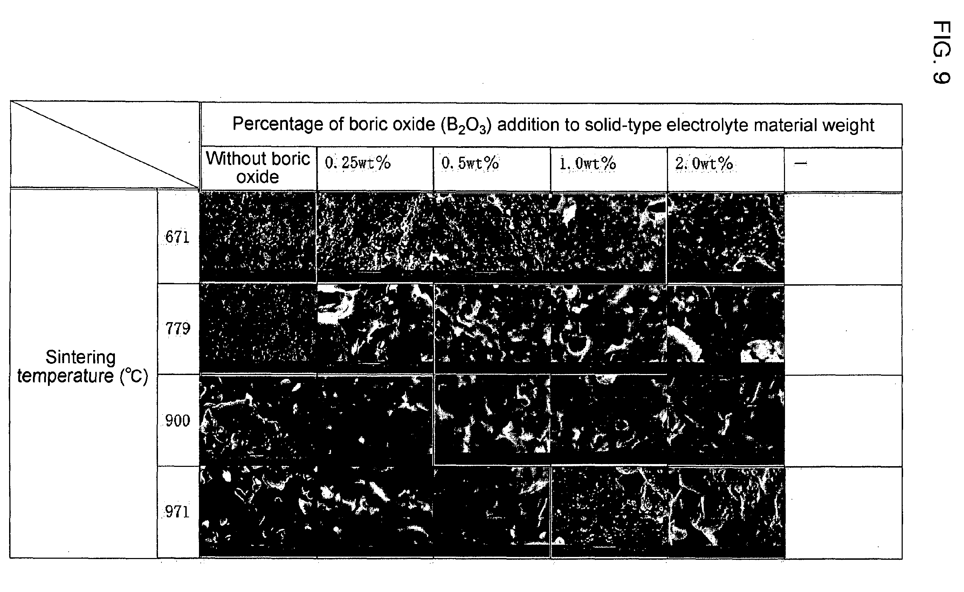

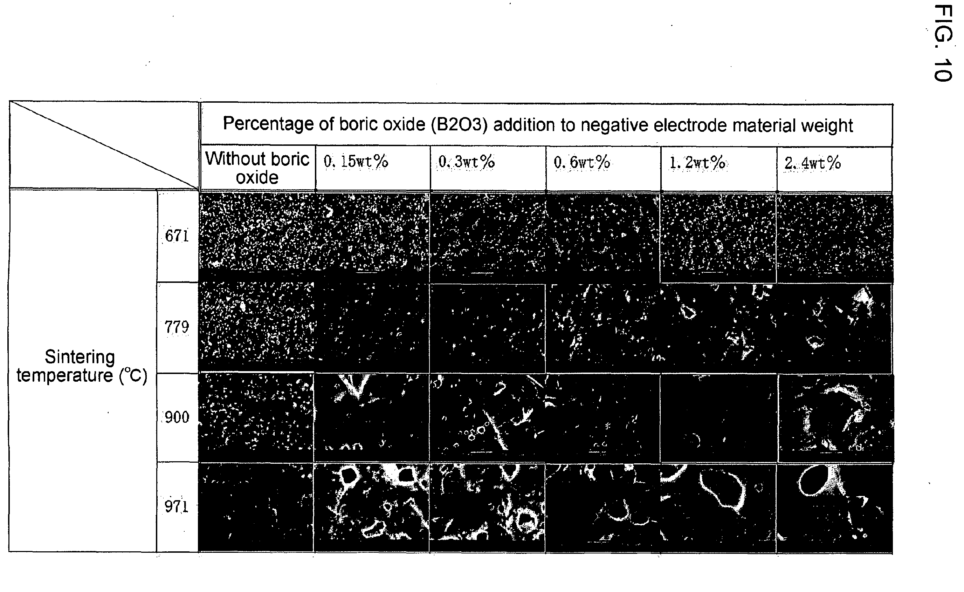

Figure 8 shows SEM pictures of fracture faces after sintering process of positive electrode material pellets. Figure 9 illustrates SEM pictures of fracture faces after sintering process of solid-type electrolyte material pellets. Figure 10 introduces SEM pictures of fracture faces after sintering process of negative electrode material pellets. As shown in fracture face pictures, grain sizes are large and sintering proceeds in the pictures of samples that are subject to sintering at 779 degrees centigrade or higher after B₂O₃ is added at 0.15 to 0.25 wt% or higher. It is found that addition of B₂O₃ and performing sintering enlarge diameters of grains of each material that forms a battery, that is grain boundary dissolution proceeds. In terms of internal resistance decrease due to grain boundary dissolution within material, higher effect can be made when additive amount is 0.15 wt% or more. Thanks to these characteristics, diffusion resistance of lithium ion decreases, which makes production of high-performance batteries with lower internal resistance. The effects of addition of a sintered aid or melting agent are (a) shrinkage behavior adjustment upon material sintering, (b) promotion of lithium ion diffusion due to sintering of and grain boundary dissolution in positive electrode material, electrolyte material, and negative electrode material, (c) favorable bonding at the contact boundary face between a positive electrode material and electrolyte material, and a negative electrode material and electrolyte material. As described above, in terms of shrinkage behavior control, additive amount of sintering aid is preferably 1 wt% or more. In terms of promotion of grain boundary diffusion, promotion of lithium ion diffusion, battery performance increase due to favorable bonding, however, the favorable additive amount range of sintered aid is preferably to be 0.15 wt% or more without limited to 1 wt% or more. On the other hand, excessive addition of a sintered aid is not favorable as it leads to a decrease of contents of solid-type electrode in terms of battery performance. It is, therefore, favorable that batteries are produced using optimum conditions of content of sintered aid considering impacts on these several different effects

### Industrial Applicability

As above explained, the present invention can prevent delamination and non-lamination that are caused by shrinkage factor difference of each material forming a battery. Moreover, decrease in sintering temperature can lead to production cost reduction.

## Claims

1. A multilayer all solid state lithium ion secondary battery, in which a stacked body is formed by alternately stacking positive electrode layers and negative electrode layers with a solid-type electrolyte layer sandwiched and undergoes a sintering process, wherein a boron compound is added to the positive electrode layer, the negative electrode layer, and/or the solid-type electrolyte layer.

2. The lithium ion secondary battery according to claim 1, wherein the boron compound is B₂O₃, or a compound that produces B₂O₃ through thermal decomposition or oxidization.

3. The lithium ion secondary battery according to any one of claims 1 and 2, wherein the additive amount of the boron compound is 0.15 wt% or more in weight of boron oxide equivalent.

4. A sintering aid consisting of a boron compound that is doped into the positive electrode layer, the negative electrode layer, and/or the solid-type electrolyte layer to accelerate the sintering, the sintering aid that is used for a multilayer all solid state lithium ion secondary battery, wherein a stacked body is formed by alternately stacking positive electrode layers and negative electrode layers with a solid-type electrolyte layer sandwiched and undergoes a sintering process.

5. A method of producing a lithium ion secondary battery that comprises at least the steps of forming the paste for positive electrode by dispersing positive electrode materials over vehicle, forming the paste for solid-type electrolyte by dispersing solid-type electrolyte materials over vehicle, forming the paste for negative electrode materials over vehicle, forming a positive electrode sheet by coating and drying the paste for positive electrode, forming a solid-type electrolyte sheet by coating and drying the paste for the solid-type electrolyte, forming a negative sheet by coating and drying the paste for the negative paste, forming a stacked body by stacking the positive electrode sheet, the solid-type electrolyte sheet, and the negative electrode sheet, and forming a sintered stacked body by stacking the stacked body, wherein boron compound is doped into the positive electrode material, the solid-type electrolyte material, and/or the negative electrode material, and then they are co-fired.

6. A method for producing lithium ion secondary battery according to claim 5, wherein the boron compound is B₂O₃, or a compound that produces B₂O₃ through thermal decomposition or oxidation.

7. A method for producing a lithium ion secondary battery according to any one of claims 5 and 6, wherein the additive amount of the boron compound is 0.15 wt% or more in weight of boron oxide equivalent.

8. A method for producing a lithium ion secondary battery according to one of claims from 5 to 7, wherein the sintering temperature during the process of the sintering is no less than 600 degrees centigrade and no more than 1100 degrees centigrade.

9. A method for producing a lithium ion secondary battery according to one of claims from 5 to 7, wherein the sintering temperature during the process of the sintering is no less than 700 degrees centigrade and no more than 1100 degrees centigrade.
